# EUROPEAN PATENT SPECIFICATION

(11) **EP 4 136 288 B1**
(45) Date of publication and mention of the grant of the patent: **30.09.2026**
(21) Application number: 21787704.2
(22) Date of filing: 01.02.2021
(51) Int. Cl.: A01N 25/08, A01N 59/14, A01P 1/00, D06M 11/82, D06M 13/203, D06M 16/00

(54) **ANTIBACTERIAL AND ANTIVIRAL FABRIC**
ANTIBAKTERIELLES UND ANTIVIRALES GEWEBE
TISSU ANTIBACTÉRIEN ET ANTIVIRAL

(30) Priority: 14.04.2020 TR 202005867
(43) Date of publication of application: 22.02.2023
(73) Proprietor: Cikman, Mustafa Cüneyt, Gebze/Kocaeli (TR)
(72) Inventor: Cikman, Mustafa Cüneyt, Gebze/Kocaeli (TR)
(74) Representative: Kaya, Erdem
(86) International application number: PCT/TR2021/050095
(87) International publication number: WO 2021/211075

(56) References cited:
- CN-A- 107 675 481
- GB-A- 1 399 202
- JP-A- 2013 112 903
- US-A1- 2007 054 819
- US-A1- 2010 093 595
- IYIGUNDOGDU ZEYNEP USTAOGLU; DEMIR OKAN; ASUTAY AYLA BURCIN; SAHIN FIKRETTIN: "Developing Novel Antimicrobial and Antiviral Textile Products", APPLIED BIOCHEMISTRY AND BIOTECHNOLOGY, HUMANA PRESS INC, NEW YORK, vol. 181, no. 3, 12 October 2016 (2016-10-12), New York , pages 1155 - 1166, XP036185392, ISSN: 0273-2289, DOI: 10.1007/s12010-016-2275-5
- SOKMEN NIHAL, BANU YESIM BUYUKAKINCI: "The Usage Of Boron/Boron Compounds In The Textile Industry And Its Situation In Turkey", CBU INTERNATIONAL CONFERENCE PROCEEDINGS, vol. 6, 25 September 2018 (2018-09-25), pages 1158 - 1165, XP055864709, DOI: 10.12955/cbup.v6.1309
- MIZUTANI CHIYOMI, MOMOE UKAJI, NAOKI HORIKAWA, TOMOYOSHI YAMAMOTO, HIDEAKI MORIKAWA, KANJI KAJIWARA: "Study of Weak-acidic Clothing Materials Developed for Skin Conditioning", vol. 69, no. 4, 1 January 2013 (2013-01-01), pages 73 - 77, XP055864713

## Description

### TECHNICAL FIELD

The present invention relates to a nontoxic antibacterial and antiviral fabric developed for providing textiles used in a plurality of fields, particularly in the field of health, with antibacterial and antiviral properties.

### PRIOR ART

In today's world, a variety of antibacterial products are used in areas requiring hygiene, particularly in the field of health, and sanitary textile products made of antibacterial fabrics are also included among such products.

In order to impart antibacterial properties to textiles, various antibacterial solutions are impregnated on the threads of the fabric constituting the textile. Such solutions impregnated on the threads usually contain silver ion, and as is known, silver ion is a substance belonging to the class of heavy metals, and causes a variety of toxic effects in both short and long periods as a result of its penetration into the body following a prolonged contact therewith. The use of solutions containing silver ion for imparting antibacterial properties to textiles results in a great variety of serious damages, as well as its benefits.

Of a several studies carried out on the said subject-matter, a national patent application no. TR 2018/08516 discloses "a novelty in a method for producing an environment-friendly antibacterial fabric", and states that the respective study relates to a method for producing an environment-friendly fabric used as an odor- resistant antibacterial fabric in the field of textile, and as antibacterial textile products such as bandage, surgical gown, etc. in the field of health. Another national patent application no. TR 2018/00468 discloses "a method for producing an antibacterial fabric from the extract of the roots of Althaea officinalis L. (medicinal marshmallow)", and states that the respective study relates to a method comprising the steps of specifically processing the roots of Althaea officinalis L. (medicinal marshmallow) to extract the antibacterial components therein without allowing them to decompose, and of efficiently applying the resulting extract on fabrics again without allowing such antibacterial components to decompose in order to obtain an antibacterial fabric. Thus, the need to eliminate such shortcomings and disadvantages of the embodiments and practices employed in the prior art entails an improvement in the respective technical field.

As one of the studies in the relevant technical field, document D1, JP 2013 112903 A, discloses an antimicrobial fibre structure obtained by treating a fibrous structure containing cellulosic fibres with an aqueous solution comprising an organic acid. The organic acid disclosed in D1 may be boric acid, and the fibrous structure is treated in the aqueous solution under defined treatment conditions. However, D1 does not disclose an antibacterial and antiviral fabric comprising a solution containing both H₃BO₃ (boric acid) and C₆H₇KO₂ (potassium sorbate).

As another study in the relevant technical field, document D2, US 2007/054819 A1, discloses fabric treating compositions comprising sodium sorbate as an antimicrobial compound. Although D2 relates to compositions for treating fabrics, it does not disclose the use of H₃BO₃ (boric acid) together with C₆H₇KO₂ (potassium sorbate) in a solution for providing antibacterial and antiviral properties through an increase in the level of acidity.

As a further study in the relevant technical field, document D3, GB 1 399 202 A, discloses antimicrobial compositions comprising derivatives of bis-hydroxyphenyl-alkanes for combating microorganisms, which may be used for the treatment of fabrics. D3 also mentions boric acid and potassium sorbate among known antimicrobial agents. However, D3 does not disclose an antibacterial and antiviral fabric comprising a solution containing H₃BO₃ (boric acid) and C₆H₇KO₂ (potassium sorbate) for providing a more effective antibacterial property through an increase in the level of acidity.

### OBJECTIVE OF THE INVENTION

The present invention relates to an antibacterial and antiviral fabric developed for eliminating the aforementioned disadvantages and providing new advantages to the respective technical field.

The objective of the present invention is to provide for an antibacterial and antiviral fabric which can be employed for obtaining textiles used in a plurality of fields, especially in the field of health, features antibacterial and antiviral properties, and also, has no toxicity as it does not contain metals included in the class of heavy metals, such as silver or the like, unlike the already existing products of the same kind.

A further objective of the present invention is to provide said antibacterial and antiviral fabric by means of a solution containing H₃BO₃ (boric acid) for providing antibacterial and antiviral effects and C₆H₇KO₂ (potassium sorbate) for providing a more effective antibacterial property through an increase in the level of acidity, wherein the amounts of H₃BO₃ and C₆H₇KO₂ in the solution are equal.

The structural and characteristic features of the present invention, including all of its advantages, will be more clearly understood when the detailed description given below is read, and thus, the present invention should be evaluated by taking this detailed description into consideration.

### DETAILED DESCRIPTION OF THE INVENTION

The present invention relates to a fabric developed for providing textiles used in a plurality of fields, particularly in the field of health, with antibacterial and antiviral properties.

The antibacterial and antiviral fabric of the present invention is impregnated with an antibacterial and antiviral solution containing no metals belonging to the class of heavy metals, such as silver or the like. Thus, the toxic effects caused by heavy metals are avoided.

The solution impregnated on the threads of the antibacterial and antiviral fabric contains H₃BO₃ (boric acid) for providing antibacterial and antiviral effects and C₆H₇KO₂ (potassium sorbate) for providing a more effective antibacterial property through an increase in the level of acidity.

The amounts of H₃BO₃ (boric acid) and C₆H₇KO₂ (potassium sorbate) in the solution are the same.

The solution is prepared by mixing H₃BO₃ (boric acid) and C₆H₇KO₂ (potassium sorbate) with the same level of distilled water under room temperature. The solution thus prepared is impregnated on the threads of the fabric desired to be provided with antibacterial and antiviral properties.

By using H₃BO₃ (boric acid) instead of silver ion and by using C₆H₇KO₂ (potassium sorbate) together with H₃BO₃ (boric acid) in the same amount, an antibacterial and antiviral fabric which does not contain heavy metals such as silver is obtained.

## Claims

1. An antibacterial and antiviral fabric which can be employed for obtaining a variety of textiles used in multiple fields, especially in the field of health, which features antibacterial and antiviral properties and is non-toxicity since it does not contain metals belonging to the class of heavy metals such as silver or the like,
**characterized in that** the antibacterial and antiviral fabric comprises H₃BO₃ boric acid, for providing antibacterial and antiviral effects and C₆H₇KO, potassium sorbate, for providing a more effective antibacterial property through an increase in the level of acidity,
wherein the amounts of H₃BO₃ and C₆H₇KO₂ in the solution are equal.

## Patentansprüche

1. Antibakterielles und antivirales Gewebe, das zur Gewinnung einer Vielzahl von Textilien eingesetzt werden kann, die in mehreren Bereichen, insbesondere im Gesundheitsbereich, verwendet werden, das antibakterielle und antivirale Eigenschaften aufweist und ungiftig ist, da es keine Metalle enthält, die zur Klasse der Schwermetalle, wie beispielsweise Silber oder dergleichen, gehören,
**dadurch gekennzeichnet, dass** das antibakterielle und antivirale Gewebe H₃BO₃, Borsäure, zur Bereitstellung antibakterieller und antiviraler Wirkungen und C₆H₇KO, Kaliumsorbat, zur Bereitstellung einer wirksameren antibakteriellen Eigenschaft durch eine Erhöhung des Säuregrads umfasst,
wobei die Mengen von H₃BO₃ und C₆H₇KO₂ in der Lösung gleich sind.

## Revendications

1. Une étoffe antibactérienne et antivirale qui peut être employée pour obtenir une variété de textiles utilisés dans de multiples domaines, en particulier dans le domaine de la santé, qui présente des propriétés antibactériennes et antivirales et est non toxique étant donné qu'elle ne contient pas de métaux appartenant à la classe des métaux lourds tels que l'argent ou analogue,
**caractérisée en ce que** l'étoffe antibactérienne et antivirale comprend du H₃BO₃, acide borique, pour assurer des effets antibactériens et antiviraux, et du C₆H₇KO,
sorbate de potassium, pour assurer une propriété antibactérienne plus efficace par une augmentation du niveau d'acidité,
dans laquelle les quantités de H₃BO₃ et de C₆H₇KO₂ dans la solution sont égales.
